Europäisches Patentamt

European Patent Office

Office européen des brevets

(11) Veröffentlichungsnummer: **0 496 290 A2**

## (12) EUROPÄISCHE PATENTANMELDUNG

(21) Anmeldenummer: **92100720.9**

(51) Int. Cl.5: **C02F 11/12**

(22) Anmeldetag: **17.01.92**

(30) Priorität: **25.01.91 DE 4102216**

(43) Veröffentlichungstag der Anmeldung:
**29.07.92 Patentblatt 92/31**

(84) Benannte Vertragsstaaten:
**AT BE CH DE DK ES FR GB GR IT LI LU MC
NL PT SE**

(71) Anmelder: **STEAG AG
Bismarckstrasse 54 Postfach 10 37 62
W-4300 Essen 1(DE)**

(72) Erfinder: **Thelen, Franz, Dipl.-Ing.
Mittelstrasse 15
W-4330 Mülheim(DE)**
Erfinder: **Schmidt, Andreas, Dipl.-Ing.
Carl-Mosterts-Strasse 5
W-4650 Gelsenkirchen(DE)**

(54) **Verfahren und Kraftwerksanlage zum Verwerten von Klärschlamm.**

(57) Der Klärschlamm wird thermisch getrocknet und in einer Kraftwerksfeuerung verbrannt. Die bei der Trocknung anfallenden Brüden werden ebenfalls in die Kraftwerksfeuerung eingeleitet, dort wieder aufgeheizt und nachverbrannt. Die anschließende Reinigung erfolgt zusammen mit dem Abgas der Kraftwerksfeuerung in der nachgeschalteten Gasreinigungsanlage. Aus letzterer treten die Abgase über einen Kamin in die Atmosphäre ein. Die Klärschlammtrocknung kann dabei direkt oder indirekt erfolgen. Für die direkte Trocknung wird Rauchgas entweder aus der Kraftwerksfeuerung entnommen oder in einem separaten mit Kohle, Öl, Gas oder Kohle/Klärschlamm-Gemisch gefeuerten Heißgaserzeuger erzeugt. Die indirekte Trocknung erfolgt mit Entnahmedampf aus dem Kraftwerksprozeß.

EP 0 496 290 A2

Die Erfindung betrifft ein Verfahren zum Verwerten von Klärschlamm, bei dem dieser thermisch getrocknet und in einer Kraftwerksfeuerung verbrannt wird, wobei die bei der Trocknung anfallenden Brüden und Gase entsorgt (nachbehandelt) werden. Ferner richtet sich die Erfindung auf eine Kraftwerksanlage mit einer Kraftwerksfeuerung zum Verbrennen von Kohle und Klärschlamm, der in einer Trocknungsvorrichtung getrocknet worden ist.

Die Trocknung des Klärschlamms kann direkt durch Beimischung heißer Rauchgase oder indirekt in einem Wärmetauscher unter entsprechend höherem apperativem Aufwand erfolgen. In beiden Fällen entstehen Brüden und eine Menge nicht kondensierbarer Gase. Die Brüden und die Gase müssen gereinigt werden, ehe sie abgeleitet werden können. Bei der direkten Trocknung sind die Brüden zusätzlich noch mit den Trocknungs-Rauchgasen vermischt, so daß bei diesem Verfahren erheblich größere Aufwendungen für die Reinigung entstehen.

Der Erfindung liegt die Aufgabe zugrunde, die Anwendung der Schlammtrocknung wirtschaftlicher zu gestalten.

Zur Lösung dieser Aufgabe ist das Verfahren nach der Erfindung dadurch gekennzeichnet, daß die Brüden und Gase in die Kraftwerksfeuerung eingeleitet werden.

Die Erfindung bietet also den wesentlichen Vorteil, die Schlammtrocknung thermisch mit der Kraftwerksbeheizung zu koppeln. Die bei der Trocknung anfallenden Gase und Brüden werden durch Einleiten in die Kraftwerksfeuerung entsorgt, d.h. wieder aufgeheizt und nachverbrannt. Sie gelangen in einen Bereich der Kraftwerksfeuerung, in dem so hohe Temperaturen herrschen, daß das gesamte organische Material oxidiert wird. Die Weiterbehandlung erfolgt zusammen mit den Abgasen der Kraftwerksfeuerung. Nach Passieren des Dampferzeugers gelangt das Abgas in die ohnehin nachgeschaltete Reinigungsanlage und von dort aus als unschädliches Gas durch den Kamin in die Atmosphäre, was einer vollkommenen Entsorgung der Brüden entspricht.

Diese Art der Entsorgung ist wesentlich wirtschaftlicher als die bisher bekannten, von der Kraftwerksbeheizung thermisch abgekoppelten Verfahren. Dies gilt auch unter Berücksichtigung der Tatsache, daß das Abgassystem der Anlage vergrößert werden muß.

Die Erfindung ist anwendbar auf die indirekte Trocknung des Klärschlamms, wobei diese vorzugsweise durch Beheizung mit Dampf erfolgt, der einer Anzapfstufe einer der Kraftwerksfeuerung nachgeschalteten Dampfturbine entnommen wird. Daraus resultiert eine noch engere thermische Kopplung an den Kraftwerksprozeß. Abgesehen davon hat der Dampf schon Arbeit geleistet, so daß sich eine besonders günstige Wärmenutzung mit entsprechender Steigerung des Gesamtwirkungsgrades ergibt. Die wirtschaftlichen Vorteile gegenüber einer Kondensation und Kondensatnachbehandlung der Brüden und Gase sind erheblich.

Die Erfindung ist gleichermaßen anwendbar auf die direkte Trocknung des Klärschlamms durch Zufuhr heißer Rauchgase. Zusätzliche thermische Verluste treten dabei nicht auf, da die Temperatur der mit Rauchgasen gemischten Brüden hinter der Schlammtrocknung gleich der Temperatur der Abgase hinter dem Dampferzeuger des Kraftwerkes ist. Demgegenüber treten bei einer getrennten direkten Trocknung von Klärschlamm mit gesonderter Wiederaufheizung und Nachverbrennung der Brüden und Gase zusätzliche Wärmeverluste bedingt durch die Grädigkeit des Wärmerückgewinnsystemes auf.

Besonders günstige Verhältnisse ergeben sich dann, wenn die Rauchgase für die direkte Trocknung des Klärschlamms eine Temperatur von 600 bis 1000 ° C besitzen.

In Weiterbildung der Erfindung können diese Rauchgase aus der Kraftwerksfeuerung entnommen, vorzugsweise abgesaugt werden. Abgesehen davon sind auch anderweitige Rauchgasquellen denkbar. So können die Rauchgase für die Trocknung des Klärschlamms vorteilhafterweise durch eine gesonderte Verbrennung erzeugt werden, wobei es der Kopplung von Kraftwerk und Trocknung dient, wenn diese gesonderte Verbrennung mit demselben Brennstoff/Klärschlamm-Gemisch wie die Kraftwerksfeuerung gespeist wird. Das Gemisch kann auf Wunsch in einem Puffersilo zwischengelagert werden. Alternative Brennstoffe, wie Gas oder Öl, sind ebenfalls denkbar.

Bei Schmelzfeuerungen mit Fangrost werden die Brüden und Gase am günstigsten hinter dem Fangrost in die Kraftwerksfeuerung eingeleitet, bei Trockenfeuerungen hingegen in deren Feuerraum. Schmelzfeuerungen bieten den zusätzlichen Vorteil, daß die gesamten Klärschlammrückstände in das Schmelzgranulat eingebunden werden, ohne daß die Gefahr einer Umweltbelastung durch Auslaugen bei späterer Weiterverwertung oder Lagerung besteht.

Ferner ist es vorteilhaft, die Brüden und Gase vor Einleitung in die Krafwerksfeuerung von Feststoffen zu befreien und letztere dem getrockneten Schlamm beizugeben.

Bei einem Kesselschnellschluß muß sofort die gesamte Zufuhr der Brüden zur Kraftwerksfeuerung unterbrochen werden. In diesem Zusammenhang wird vorgeschlagen, die Brüden und Gase in einem Bypaß biologisch zu reinigen, bis die Trocknung abgefahren ist.

Der Klärschlamm steht in der Regel als entwässerter Naßschlamm mit 15 bis 50 % TS zur Verfügung. Seine Restfeuchte nach der thermischen Trocknung ist vorzugsweise <10%.

Nach einer Weiterbildung der Erfindung wird der getrocknete Klärschlamm dem Brennstoff der Kraftwerksfeuerung beigemischt, wobei er, sofern Kohle als Brennstoff Verwendung findet, zusammen mit dieser vermahlen und ggf. nachgetrocknet werden kann. Es wurde gefunden, daß diese gleichzeitige Einleitung des getrockneten Schlammes zusammen mit dem Brennstoff von erheblichem Vorteil ist, und zwar insbesondere dann, wenn es sich um eine Staubfeuerung handelt. Nach Wunsch kann der getrocknete Klärschlamm vorher in einem Puffersilo gespeichert werden.

Die Kraftwerksanlage nach der Erfindung ist bei der direkten Trocknung gekennzeichnet durch eine erste Leitung zum Zuführen von mit Rauchgasen gemischten Brüden aus der Trocknungsvorrichtung zur Kraftwerksfeuerung und durch eine zweite Leitung zum Zuführen von getrocknetem Klärschlamm aus der Trocknungsvorrichtung zur Kraftwerksfeuerung. Hierdurch wird in einfacher Weise eine direkte thermische Ankopplung der Trocknungsvorrichtung, bei der es sich vorzugsweise um einen Trommeltrockner handelt, an die Kraftwerksfeuerung gewährleistet. Die Trocknungsvorrichtung liefert sowohl den getrockneten Klärschlamm als auch die mit Abgasen gemischten Brüden direkt an die Kraftwerksfeuerung, und zwar jeweils an den Ort der Verbrennung bzw. den der Abgasweiterleitung. Um diese thermische Kopplung noch enger zu gestalten, kann die Trocknungsvorrichtung die erforderliche Energie von der Kraftwerksfeuerung erhalten, und zwar durch eine Leitung zum Zuführen von heißen Rauchgasen.

Die Kraftwerksanlage nach der Erfindung ist bei indirekten Trocknung ebenfalls durch eine erste Leitung zum Zuführen der Brüden aus der Trocknungseinrichtung zur Kraftwerksfeuerung und durch eine zweite Leitung zum Zuführen von getrocknetem Klärschlamm aus der Trocknungsvorrichtung zur Kraftwerksfeuerung gekennzeichnet. Eine engere thermische Kopplung der Trocknungsvorrichtung mit dem Kraftwerksprozeß wird durch den Entnahmedampf von der Turbine des Kraftwerkes, der die erforderliche Trocknungsenergie liefert, erreicht.

Im Falle einer Staubfeuerung ist es vorteilhaft, den getrockneten Klärschlamm vor einem Mahlwerk in eine Kohleleitung einzutragen.

Vorzugsweise zweigt von der ersten Leitung, die die Brüden führt, ein Bypaß zu einem Biofilter ab. Dies ermöglicht einen Entsorgung der Brüden im Falle eines Kesselschnellschlusses.

Als erfindungswesentlich offenbart gelten auch solche Kombinationen der erfindungsgemäßen Merkmale, die von den oben diskutierten Verknüpfungen abweichen.

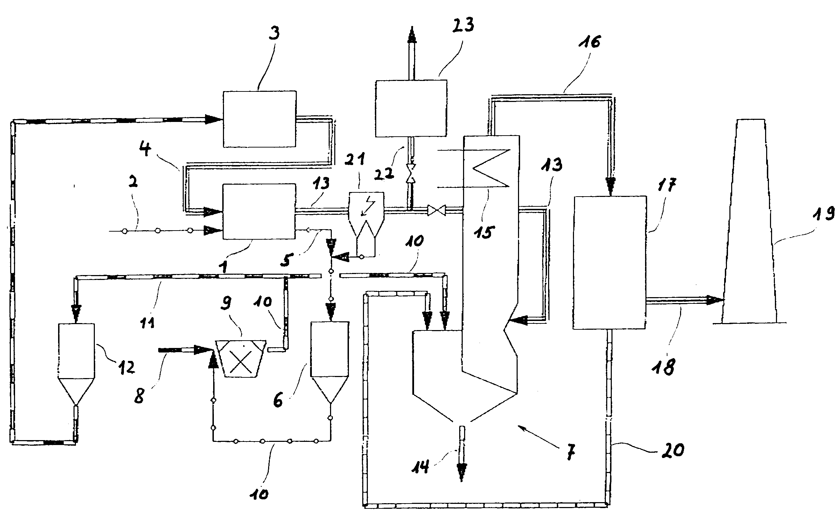

Die Erfindung wird im folgenden anhand eines bevorzugten Ausführungsbeispiels mit direkter Trocknung im Zusammenhang mit der beiliegenden Zeichnung näher erläutert. Die Zeichnung zeigt schematisch eine erfindungsgemäße Kraftwerksanlage zur Durchführung des erfindungsgemäßen Verfahrens.

Die Anlage weist eine Trocknungsvorrichtung 1 auf, in die über eine Leitung 2 vorentwässerter Klärschlamm eingeführt wird. Es handelt sich um Naßschlamm mit 15 bis 50 % TS. Ferner ist ein Rauchgaserzeuger 3 vorgesehen, der die Trocknungsvorrichtung 1 über eine Leitung 4 mit heißen Rauchgasen beschickt. Letztere besitzen eine Temperatur von 600 bis 1000 ° C. Der getrocknete Klärschlamm verläßt die Trocknungsvorrichtung 1 über eine Leitung 5 und gelangt zur Zwischenspeicherung in ein Puffersilo 6. Er hat eine Temperatur von ca. 100 ° C und eine Restfeuchte von < 10%.

Die Anlage umfaßt ferner eine Kraftwerksfeuerung 7, die als Staubfeuerung ausgebildet ist und mit Kohle beschickt wird. Letztere gelangt über eine Leitung 8 in ein Mahlwerk 9, wobei in die Leitung 8 vor dem Mahlwerk 9 eine Leitung 10 mündet, die getrockneten Klärschlamm aus dem Puffersilo 6 führt. Kohle und Klärschlamm werden also gemeinsam in dem Mahlwerk 9 verarbeitet. Das gemahlene Kohle/Klärschlamm-Gemisch gelangt über eine Leitung 10 zur Kraftwerksfeuerung 7.

Von der Leitung 10 zweigt eine Leitung 11 ab, die über ein Puffersilo 12 zum Rauchgaserzeuger 3 führt. Letzterer wird also ebenfalls mit dem aus dem Mahlwerk 9 kommenden Kohle/Klärschlamm-Gemisch gespeist.

Die Trocknungsvorrichtung 1, bei es der sich in diesem Beispiel um einen Trommeltrockner handelt, arbeitet mit direkter Trocknung. Die heißen Rauchgase treten also direkt mit dem Klärschlamm in Berührung. Dabei entstehen mit Rauchgasen gemischte Brüden, die die Trocknungsvorrichtung 1 über eine Leitung 13 verlassen, und zwar mit einer Temperatur von ca. 150 ° C. Die Leitung 13 mündet in der Kraftwerksfeuerung 7, und zwar, da es sich bei dieser um eine Schmelzfeuerung mit Fangrost handelt, oberhalb des letzteren. Innerhalb der Kraftwerksfeuerung werden die Brüden wieder aufgeheizt und bei so hohen Temperaturen nachverbrannt, daß sämtliche organischen Bestandteile oxidiert werden. Die gesamten Rückstände des Klärschlamms werden in das durch eine Leitung 14 austretende Granualt eingebunden, und zwar ohne die Gefahr einer späteren Auslaugung.

Die heißen Rauchgase der Kraftwerksfeuerung, gemischt mit den Rauchgasen des Rauchgaserzeugers 3 und den gasförmigen Restbestandteilen der Brüden aus der Trocknungsvorrichtung 1, passieren einen Dampferzeuger 15 und gelangen dann abgekühlt mit einer Temperatur von ca. 150 ° C über eine Leitung 16 zu einer nachgeschalteten Rauchgasreinigungsvorrichtung 17. Von hieraus treten die gereinigten Abgase über eine Leitung 18 in einen Kamin 19 ein und gelangen durch diesen hindurch zur Atmosphäre. Filterasche aus der Rauchgasreinigungsvorrichtung 17 wird über eine Leitung 20 in die Kraftwerksfeuerung 7 rezirkuliert.

In der Leitung 13 ist ein Elektrofilter 21 oder ein Zyklonabscheider angeordnet, welche die Reste an getrocknetem Klärschlamm aus den mit Rauchgasen gemischten Brüden abscheiden und in die Leitung 5 einführt.

Um bei einem Kesselschnellschluß eine ausreichende Reinigung der mit Rauchgasen gemischten Brüden sicherstellen zu können, zweigt von der Leitung 13 ein Bypaß 22 ab, der zu einem Biofilter 23 führt.

Kern des erfindungsgemäßen Verfahrens ist eine thermische Kopplung der Klärschlammtrocknung mit der Kraftwerksfeuerung. Das Verfahren arbeitet mit hohem Wirkungsgrad und vergleichsweise geringem apparativem Aufwand.

Im Rahmen der Erfindung sind durchaus Abwandlungsmöglichkeiten gegeben. So kann anstelle der Schmelzfeuerung eine Trockenfeuerung verwendet werden, wobei dann die mit Rauchgasen gemischten Brüden direkt in den Feuerraum eingeleitet werden. Ferner kann auf das Biofilter verzichtet werden, sofern anderweitig eine ausreichende Entsorgung der Brüden im Falle eines Kesselschnellschlusses sichergestellt ist. Auf die dargestellten Puffersilos kann ebenfalls verzichtet werden. Insbesondere dann, wenn nicht mit einer Staubfeuerung gearbeitet wird, kann es sich empfehlen, den getrockneten Klärschlamm unabhängig von der Kohle der Kraftwerksfeuerung aufzugeben. Wird hingegen, wie dargestellt, das Kohle/Klärschlamm-Gemisch gemeinsam vermahlen, so kann sich eine Nachtrocknung anschließen. Der Rauchgaserzeuger kann mit Fremdenergie beheizt werden. Auch besteht die alternative Möglichkeit, die heißen Rauchgase aus der Kraftwerksfeuerung zu entnehmen.

Wie erwähnt, kann gegenüber der Darstellung auch eine indirekte Trocknung mit Entnahmedampf gewählt werden. Bei dieser entfallen der Rauchgaserzeuger 3, das Puffersilo 12 und die Leitung 11. Die Leitung 4 wird mit Entnahmedampf aus einer dem Dampferzeuger 15 nachgeschalteten Turbine beaufschlagt und der Trockner indirekt beheizt. Das anfallende Kondensat des Heizdampfes kann, da es nicht verunreinigt wird, direkt in den Kraftwerksprozeß zurückgeleitet werden. Die in der Leitung 13 anfallenden Gasmengen reduzieren sich gegenüber der direkten Trocknung, da sie lediglich die Brüden mit einem geringen Restanteil nicht kondensierbarer Gase enthalten.

## Patentansprüche

1. Verfahren zum Verwerten von Klärschlamm, bei dem dieser thermisch getrocknet und in einer Kraftwerksfeuerung verbrannt wird, wobei die bei der Trocknung anfallenden Brüden und Gase entsorgt werden,
   **dadurch gekennzeichnet,**
   daß die Brüden und Gase in die Kraftwerksfeuerung eingeleitet werden.

2. Verfahren nach Anspruch 1, dadurch gekennzeichnet, daß die Trocknung des Klärschlamms indirekt durch Beheizung mit Dampf erfolgt, der einer Anzapfstufe einer der Kraftwerksfeuerung nachgeschalteten Dampfturbine entnommen wird.

3. Verfahren nach Anspruch 1, dadurch gekennzeichnet, daß die Trocknung des Klärschlamms direkt durch Zufuhr heißer Rauchgase erfolgt.

4. Verfahren nach Anspruch 3, dadurch gekennzeichnet, daß die Rauchgase für die direkte Trocknung des Klärschlamms eine Temperatur von 600 bis 1000 ° C besitzen.

5. Verfahren nach Anspruch 3 oder 4, dadurch gekennzeichnet, daß die Rauchgase für die direkte Trocknung des Klärschlamms aus der Kraftwerksfeuerung entnommen werden.

6. Verfahren nach Anspruch 3 oder 4, dadurch gekennzeichnet, daß die Rauchgase für die direkte Trocknung des Klärschlamms durch eine gesonderte Verbrennung erzeugt werden.

7. Verfahren nach Anspruch 6, dadurch gekennzeichnet, daß die gesonderte Verbrennung mit demselben Brennstoff/Klärschlamm-Gemisch wie die Kraftwerksfeuerung gespeist wird.

8. Verfahren nach einem der Ansprüche 1 bis 7, dadurch gekennzeichnet, daß die Brüden und Gase bei Verwendung einer Schmelzfeuerung mit Fangrost hinter letzterem in die Kraftwerksfeuerung eingeleitet werden.

9. Verfahren nach einem der Ansprüche 1 bis 7, dadurch gekennzeichnet, daß die Brüden und Gase bei Verwendung einer Trockenfeuerung in deren Feuerraum eingeleitet werden.

10. Verfahren nach einem der Ansprüche 1 bis 9, dadurch gekennzeichnet, daß die Brüden und Gase vor Einleitung in die Kraftwerksfeuerung von Feststoffen befreit werden und daß letztere dem getrockneten Klärschlamm beigegeben werden.

11. Verfahren nach einem der Ansprüche 1 bis 10, dadurch gekennzeichnet, die Brüden und Gase bei einem Schnellschluß der Kraftwerksfeuerung in einem Bypaß biologisch gereinigt werden.

12. Verfahren nach einem der Ansprüche 1 bis 11, dadurch gekennzeichnet, daß die thermische Trocknung des Klärschlamms auf eine Restfeuchte < 10% erfolgt.

13. Verfahren nach einem der Ansprüche 1 bis 12, dadurch gekennzeichnet, daß der getrocknete Klärschlamm dem Brennstoff der Kraftwerksfeuerung beigemischt wird.

14. Verfahren nach Anspruch 13, dadurch gekennzeichnet, daß der getrocknete Klärschlamm bei Verwendung von Kohle als Brennstoff der Kraftwerksfeuerung zusammen mit der Kohle vermahlen und ggf. nachgetrocknet wird.

15. Kraftwerksanlage mit einer Kraftwerksfeuerung zum Verbrennen von Kohle und Klärschlamm, der in einer Trocknungsvorrichtung unter Zufuhr heißer Rauchgase direkt getrocknet worden ist, gekennzeichnet durch eine erste Leitung (13) zum Zuführen von mit Rauchgasen gemischten Brüden aus der Trocknungsvorrichtung (1) zur Kraftwerksfeuerung (7) und durch eine zweite Leitung (5, 10) zum Zuführen von getrocknetem Klärschlamm aus der Trocknungsvorrichtung (1) zur Kraftwerksfeuerung (7).

16. Kraftwerksanlage nach Anspruch 15, gekennzeichnet durch eine dritte Leitung zum Zuführen von heißen Rauchgasen aus der Kraftwerksfeuerung (7) zur Trocknungsvorrichtung (1).

17. Kraftwerksanlage nach Anspruch 15 oder 16, dadurch gekennzeichnet, daß die zweite Leitung (5, 10) vor einem Mahlwerk (9) in einer Kohleleitung (8) mündet.

18. Kraftwerksanlage nach einem der Ansprüche 15 bis 17, dadurch gekennzeichnet, daß von der ersten Leitung (13) ein zu einem Biofilter (23) führender Beipaß (22) abzweigt.